Europäisches Patentamt

European Patent Office

Office européen des brevets

(19)

(11) Publication number: **0 044 654**

A2

(12) **EUROPEAN PATENT APPLICATION**

(21) Application number: **81303073.1**

(22) Date of filing: **06.07.81**

(51) Int. Cl.³: **B 60 K 15/04**
**B 65 D 51/00, B 65 D 51/24**

(30) Priority: **18.07.80 GB 8023563**

(43) Date of publication of application:
**27.01.82 Bulletin 82/4**

(84) Designated Contracting States:
**DE FR GB IT SE**

(71) Applicant: **FORD MOTOR COMPANY LIMITED**
**Eagle Way**
**Brentwood Essex CM13 3BW(GB)**

(84) Designated Contracting States:
**GB IT SE**

(71) Applicant: **FORD-WERKE AKTIENGESELLSCHAFT**
**Ottoplatz 2 Postfach 210369**
**D-5000 Köln 21(DE)**

(84) Designated Contracting States:
**DE**

(71) Applicant: **FORD FRANCE SOCIETE ANONYME**
**344 Avenue Napoleon Bonaparte B.P. 307**
**F-92506 Rueil Malmaison Cedex(FR)**

(84) Designated Contracting States:
**FR**

(72) Inventor: **Ellis, Peter Joseph**
**26 Drake Close**
**Thundersley Benfleet Essex(GB)**

(72) Inventor: **Maguire, Philip Macarten**
**32 Brendon**
**Laindon Basildon Essex(GB)**

(72) Inventor: **Ewers, Peter G.**
**6 Poplar Close**
**South Woodham Ferrers Essex(GB)**

(74) Representative: **Drakeford, Robert William et al,**
**Ford Motor Company Limited 15/448, Research &**
**Engineering Centre Laindon**
**Basildon Essex SS15 6EE(GB)**

(54) **Fuel tank closure.**

(57) A fuel tank closure comprises a closure cap (5) removably mounted in a fuel tank inlet pipe (1) and carrying a permanent magnet (14) which operates an encapsulated reed switch (8) mounted adjacent the mouth of the pipe. The switch (8) activates a warning lamp in the vehicle when the cap (5) is removed without producing sparks in the region of the fuel tank.

EP 0 044 654 A2

DESCRIPTION

This invention relates to fuel tank closures, especially to motor vehicle fuel tank closures.

It is a common occurence for a driver having filled the fuel tank of his or her vehicle to forget to replace the closure cap. It would be desirable to provide a device for producing a warning signal, such as a warning light, within the vehicle to indicate to the driver that the fuel tank closure is not in place. Such a device would require an electrical switch in the region of the fuel tank closure which is actuated when the closure is removed to illuminate the warning light. It would be unsafe to provide a simple switch with exposed contacts in the region of the fuel tank inlet because such switches can generate sparks which could ignite the fuel vapour.

According to the present invention there is provided a fuel tank closure comprising a closure cap for a fuel tank inlet, a magnetically operable switch adapted to be mounted on or adjacent the inlet, the switch having contacts for making and breaking an electrical circuit enclosed within an hermetically sealed chamber, and a magnet mounted on the closure cap for operating the switch when the cap is mounted on the inlet adjacent.

By using a magnetically operated switch with hermetically sealed contacts, the risk of sparking from the switch is eliminated.

One simple and convenient form of switch is an encapsulated reed switch of the kind frequently used in the manufacture of relays. The switch will normally be connected to the coupling by means of lead wires, and, in order to reduce even the risk of sparking as a result of the lead wire becoming accidentally detached from the switch, the switch and the region of the lead wires adjacent the switch are preferably encapsulated in a block of electrically insulating material.

A preferred embodiment of the invention will now be described, by way of example only, with reference to the drawings, in which:-

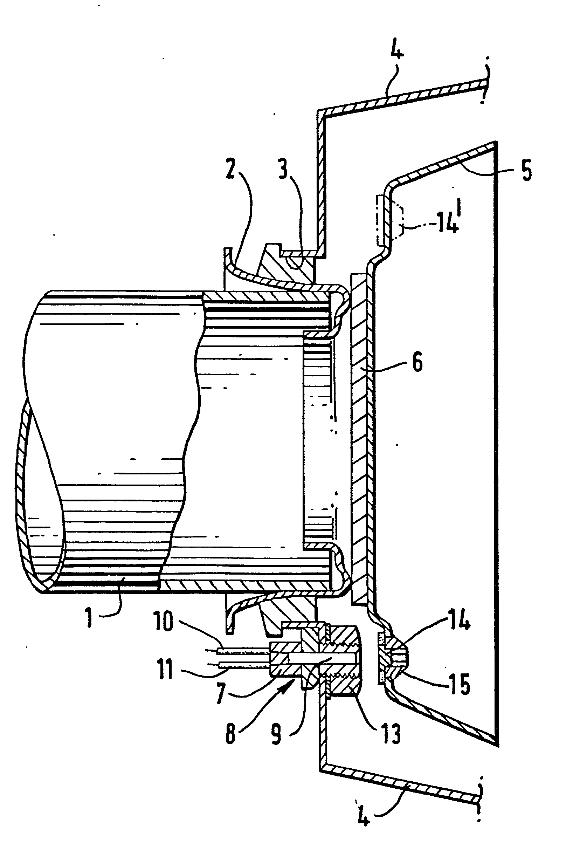

Figure 1 is a cross-section through a fuel tank closure in accordance with the invention.

Referring to the drawing, a motor vehicle has a fuel pipe 1 the inlet flange 2 of which is secured an aperture 3 in the body panel 4 of the vehicle. A closure cap 5 carrying a gasket 6 is removably mounted in a conventional manner in the aperture 3 to close the inlet 2 to the fuel pipe 1. A reed switch 8 encapsulated in a block 7 of electrically insulating plastics material is fixed to the body panel 4 adjacent the inlet 2. The reed switch 6 has two contacts (not visible in the drawing) enclosed within an hermetically sealed chamber 9. The contacts are made of magnetisable material and are arranged so that they contact each other when an external magnetic field is applied to the switch 8. Each contact is itself connected to a respective lead wire 10, 11, the ends of which adjacent the chamber 9 are encapsulated in the block 7. The block 7 is retained in an aperture 12 in the body panel 4 by means of a nut 13. The closure cap 5 carries a permanent magnet 14 on its inner face, the magnet 14 and switch 8 being so positioned that, when the closure cap 5 is positioned properly in the inlet 2, the magnet 14 overlies the switch 8 and closes the contacts therein. The magnet 14 is secured to the cap 5 by means of a mounting block 15 of plastics material which is a press-fit into an aperture in the cap. Where the cap 5 can be positioned in the aperture 3 in either of two positions, a second magnet 14' may be provided on the cap so that a magnet lies against the switch 8 in either position of the cap.

In use the leads 10, 11 are connected into an electrical circuit with a warning light on the instrument panel, the battery and the ignition switch of the vehicle so that, with the ignition switch turned on and the cap 5 properly in place, the warning light is not illuminated, the warning light being illuminated when the cap 5 is removed.

The embodiment of the invention described above therefore provides a simple and safe construction for providing a warning to the driver that the fuel tank closure cap 5 is not properly in place.

CLAIMS

1. A fuel tank closure comprising a closure cap for a fuel tank inlet, a magnetically operable switch adapted to be mounted on or adjacent the inlet, the switch having contacts for making and breaking an electrical circuit enclosed within an hermetically sealed chamber, and a magnet mounted on the closure cap for operating the switch when the cap is mounted on the inlet adjacent.

2. A closure according to Claim 1 wherein the said switch comprises a reed switch.

3. A closure according to Claim 1 or Claim 2 wherein the switch is connected to an electrical circuit by lead wires, and the switch and the region of the lead wires adjacent the switch are encapsulated in a block of electrically insulating material.

4. A fuel tank closure substantially as hereinbefore described, and as illustrated in the drawings.

0044654